# EUROPEAN PATENT APPLICATION

(11) **EP 1 781 059 A2**
(43) Date of publication of application: **02.05.2007**
(21) Application number: 06020289.2
(22) Date of filing: 27.09.2006
(51) Int. Cl.: H04Q 7/38, H04Q 7/32, H04M 19/04

(54) **Wireless communications system with multiple telephone numbers**

(30) Priority: 28.10.2005 US 261168
(71) Applicant: Hewlett-Packard Development Company, L.P., Houston, TX 77070 (US)
(72) Inventor: Voltz, Christopher D., Houston, Texas 77070 (US)
(74) Representative: Schoppe, Fritz

(57) **Abstract**

A multi-number wireless communication system (10) comprises a wireless communication device (12) configured to initiate a telephone call using each of at least two different telephone numbers (30) assigned thereto.

## Description

### BACKGROUND OF THE INVENTION

Wireless communication devices, such as telephones, cell phones, portable computers via VoIP (voice over Internet protocol), pagers, etc., are becoming increasingly popular as a means to stay connected with business, family, and friends. However, unless a user of such devices is willing to carry multiple or duplicate devices (e.g., resembling the "utility belt" look), the same device is generally used for a variety of purposes (e.g., business and personal). Thus, a user of the device generally tends to screen calls during particular times (e.g., screen business-related calls on the weekend, screen personal calls during business meetings, etc.) which is oftentimes difficult and/or troublesome. Further, identifying costs associated with use of the device for particular purposes (e.g., business-related costs for reimbursement) is difficult and time-consuming.

### BRIEF DESCRIPTION OF THE DRAWINGS

For a more complete understanding of the present invention and the advantages thereof, reference is now made to the following descriptions taken in connection with the accompanying drawings in which:

FIGURE 1 is a diagram illustrating an embodiment of a multi-number wireless communication system in accordance with the present invention;

FIGURE 2 is a flow diagram illustrating an embodiment of a multi-number wireless communication method in accordance with the present invention;

FIGURE 3 is a flow diagram illustrating another embodiment of a multi-number wireless communication method in accordance with the present invention; and

FIGURE 4 is a flow diagram illustrating yet another embodiment of a multi-number wireless communication method in accordance with the present invention.

### DETAILED DESCRIPTION OF THE DRAWINGS

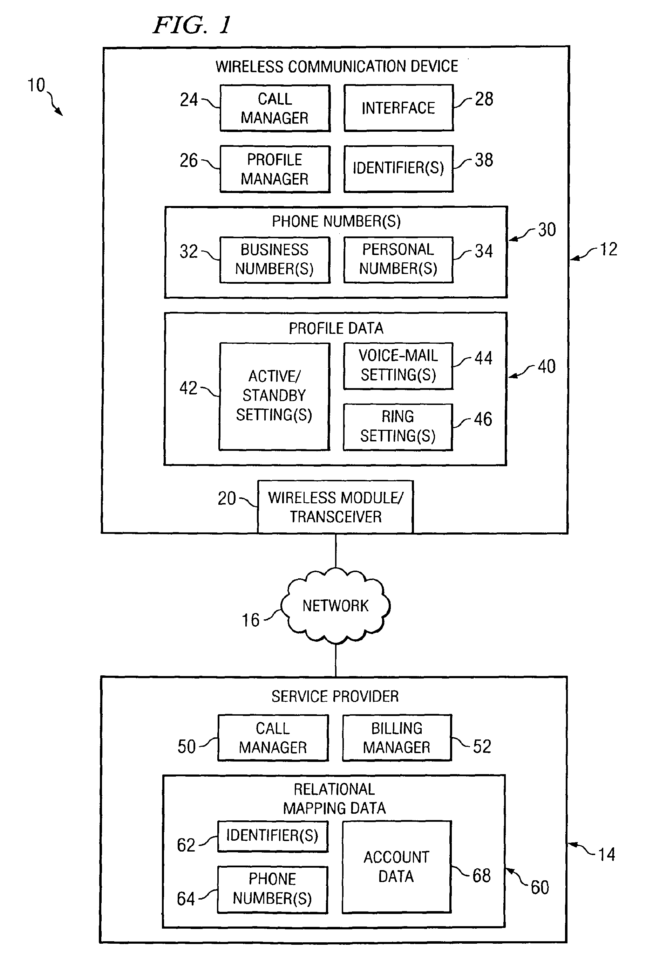

The preferred embodiments of the present invention and the advantages thereof are best understood by referring to FIGURES 1-4 of the drawings, like numerals being used for like and corresponding parts of the various drawings.

FIGURE 1 is a diagram illustrating an embodiment of a multi-number wireless communication system 10 in accordance with the present invention. In the embodiment illustrated in FIGURE 1, system 10 comprises a wireless communication device 12 configured for wireless telephone communications corresponding to and/or otherwise provided by a service provider 14 over a wireless communication network 16. Wireless communication device 12 may comprise any type of device having a wireless module/transceiver 20 for enabling independent transmission/reception of wireless telephone communications by communication device 12 such as, but not limited to, a cellular phone, pager, notebook or laptop computer, tablet computer, personal digital assistant, or other type of portable or non-portable device.

In the embodiment illustrated in FIGURE 1, wireless communication device 12 comprises a call manager 24, a profile manager 26, and an interface 28. Call manager 24 and profile manage 26 may comprise hardware, software, or a combination of hardware and software. Interface 28 may comprise any device for providing information to a user from device 12 and/or receiving information from a user. For example, interface 28 may comprise a liquid crystal display (LCD), microphone, speaker, or keypad.

In the embodiment illustrated in FIGURE 1, wireless communication device 12 is configured having a plurality of different phone numbers 30 assigned thereto such that wireless communication device 12 is configured to initiate and/or receive telephone calls on each of the assigned phone numbers 30. As used herein, a different telephone number 30 includes a uniquely different number or a different extension of the same or a single number. In the embodiment illustrated in FIGURE 1, communication device 12 comprises business telephone number(s) 32 and personal telephone number(s) 34 assigned thereto. Business telephone number(s) 32 may represent a user's business-related telephone number(s) for communication device 12, and personal telephone number(s) 34 may represent a user's personal or non-business telephone number(s) for communication device 12. Thus, for example, embodiments of the present invention enable a user of wireless communication device 12 to initiate, receive and/or otherwise distinguish between telephone calls using at least two different telephone numbers.

In the embodiment illustrated in FIGURE 1, wireless communication device 12 comprises identifier(s) 38 used for distinctly identifying each telephone number 30 assigned to wireless communication device 12. For example, in some embodiments of the present invention, identifier(s) 38 comprise different electronic serial numbers (ESNs) assigned to wireless communication device 12 that are uniquely associated with each telephone number 30 assigned to wireless communication device 12. However, it should be understood that other types of information and/or methods may be used to uniquely identify and/or distinguish between different telephone numbers 30 assigned to wireless communication device 12.

Profile manager 26 is used to configure various types of settings for each telephone number 30 assigned to wireless communication device 12. For example, in the embodiment illustrated in FIGURE 1, wireless communication device 12 comprises profile data 40 having information associated with profile settings configured for each telephone number 30 assigned to wireless communication device 12. In the embodiment illustrated in FIGURE 1, profile data 40 comprises active/standby setting(s) 42, voice-mail setting(s) 44 and ring setting(s) 46. Active/standby setting(s) 42 comprise information associated with configuring a particular telephone number 30 to be in active mode (e.g., actively notifying and/or otherwise indicating to a user notice of an incoming telephone call) or standby mode (e.g., automatically forwarding an incoming telephone call to voice-mail, not answering or connecting to the incoming telephone call and/or otherwise not indicating to a user notice of an incoming telephone call). Voice-mail setting(s) 44 comprise information associated with configuring different voice-mail options for each telephone number 30 assigned to wireless communication device 12. For example, voice-mail setting(s) 44 may be configured having a business-type greeting and/or message for business telephone numbers 32 and a more personal or non-business greeting for personal telephone numbers 34 of wireless communication device 12. Ring setting(s) 46 comprise information associated with configuring different ring modes for different telephone numbers 30 assigned to wireless communication device 12. For example, in some embodiments of the present invention, particular ring modes and/or ring tones or sounds may be uniquely associated with particular telephone numbers 30 assigned to communication device 12 to enable a user of device to audibly distinguish between different types of incoming telephone calls (e.g., business or personal).

Thus, in some embodiments of the present invention, profile manager 26 is used to configure particular profile settings for each telephone number 30 assigned to communication device 12. For example, in some embodiments of the present invention, profile manager 26 is used to configure an active/standby setting 42 for each telephone number 30. Thus, in this example, a user may desire to be notified of incoming telephone calls for business telephone numbers 32 during normal business hours and have incoming calls received outside of normal business hours to be automatically directed to voice-mail. Thus, embodiments of the present invention enable active/standby settings 42 to be configured for business telephone numbers 32 such that during active mode, (e.g., during normal business hours), the user of device 12 is notified of an incoming telephone call on business telephone numbers 32 (e.g., by ring, display on interface 28 or otherwise).

In some embodiments of the present invention, call manager 24 is configured to automatically apply and/or otherwise use profile data 40 to respond to recognized incoming calls and/or callers. For example, in response to automatically identifying a source and/or originator of an incoming call (e.g., via caller identification (callerid) methods or otherwise), call manager 24 automatically applies and/or responds to the recognized incoming call based on profile data 40 (e.g., always ring and/or notify the user of the incoming call, never send to voice-mail, only direct to voice-mail, etc.).

Call manager 24 is used to manage outgoing and incoming telephone calls of wireless communication device 12. For example, in some embodiments of the present invention, call manager 24 comprises logic for distinguishing and/or otherwise identifying incoming and outgoing telephone calls with particular telephone numbers 30 assigned to wireless communication device 12. In some embodiments of the present invention, call manager 24 formats and/or otherwise encodes outgoing telephone calls using a protocol that uniquely identifies a particular telephone number 30 assigned to wireless communication device 12 used to make or initiate the call. In some embodiments of the present invention, identifier 38 (e.g., an ESN or other identifying information uniquely associated with a particular telephone number 30) is encoded and/or otherwise contained within one or more wireless communication data packets transmitted by wireless communication device 12 as part of an outgoing telephone call by wireless communication device 12. The identification information identifying the outgoing telephone call as being associated with a particular telephone number 30 is preferably located in the header of such wireless communication data packets. However, it should be understood that the identification information may be otherwise formatted and/or otherwise encoded in the outbound telephone call communication packets. Further, it should be understood that other types of identification information may be used to uniquely identify a particular outgoing telephone call with a particular telephone number 30 assigned to wireless communication device 12.

In some embodiments of the present invention, call manager 24 is used to distinguish and/or otherwise identify incoming calls to wireless communication device 12 with a particular telephone number 30 assigned to wireless communication device 12. For example, in some embodiments of the present invention, call manager 24 is configured to parse wireless communication data packets received by wireless communication device 12 to identify and/or otherwise determine identification information in the wireless communication data packets indicating and/or otherwise associating the incoming call with a particular telephone number 30. As discussed above, the information contained in the wireless communication data packets may comprise a particular identifier 38 (e.g., an ESN or other type of unique identifier) or other type of identification information associating the incoming call with a particular telephone number 30 assigned to wireless communication device 12.

In the embodiment illustrated in FIGURE 1, service provider 14 comprises a call manager 50 and a billing manager 52. Call manager 50 and billing manager 52 may comprise hardware, software, or a combination of hardware and software. Billing manager 52 is used to provide billing services based on use of wireless communication device 12 relating to each telephone number 30 assigned to wireless communication device 12. Call manager 50 is used to provide telephone service to wireless communication device 12 and distinguish between different telephone numbers 30 assigned to wireless communication device 12. For example, in some embodiments of the present invention, call manager 50 is configured to receive a request for telephone service from wireless communication device 12 and parse a wireless communication data packet received from wireless communication device 12 to identify and/or otherwise determine a particular telephone number 30 assigned to wireless communication device 12 for which telephone service is requested. Further, in some embodiments of the present invention, call manager 50 is configured to format and/or otherwise encode identification information in wireless communication data packets directed by service provider 14 to wireless communication device 12 for a call directed to wireless communication device 12 to identify the particular telephone number 30 for the call (thereby also enabling wireless communication device 12 to identify the particular telephone number 30 receiving the incoming call).

In the embodiment illustrated in FIGURE 1, service provider 14 comprises relational mapping data 60 having relational information for correlating telephone numbers 30 assigned to wireless communication device 12 to a particular account and/or for distinguishing between wireless telephone communications for each telephone number 30 assigned to wireless communication device 12. For example, in the embodiment illustrated in FIGURE 1, relational mapping data 60 comprises identifier(s) 62, telephone number(s) 64, and account data 68. Identifier(s) 62 comprise identification information relating to wireless communication device 12 used for distinguishing between and/or otherwise uniquely identifying the different telephone numbers 30 assigned to wireless communication device 12. For example, in some embodiments of the present invention, identifier(s) 62 comprise ESNs assigned to wireless communication device 12 and uniquely associated with each respective telephone number 30 assigned to wireless communication device 12. Telephone number(s) 64 represent the telephone number(s) 30 assigned to wireless communication device 12 such that relational mapping data 60 is used to map and/or otherwise correlate particular identifiers 62 with particular phone numbers 64 corresponding to wireless communication device 12. Account data 68 comprises information associated with identifying particular telephone numbers 64 assigned to a particular wireless communication device 12 with a particular service account.

Thus, in operation, wireless communication device 12 initiates an outgoing call using one of telephone numbers 30 assigned to wireless communication device 12. In some embodiments of the present invention, call manager 24 is configured to display or otherwise indicate to a user of device 12 available phone numbers 30 assigned to wireless communication device 12 for initiating an outgoing call. For example, in some embodiments of the present invention, call manager 24 is configured to display a listing on interface 28 of business telephone numbers 32 and personal telephone numbers 34 assigned to wireless communication device 12 for selection of one thereof by the user for initiating an outgoing telephone call. However, it should be understood that in other embodiments of the present invention, communication device 12 may be configured to operate in a particular mode (e.g., under a business number 32 mode) such that while in the particular mode, all outgoing calls are made using the particular mode number (e.g., the business number 32). In such an embodiment, a button, display icon, switch, or other device may be used to switch from one mode to another (e.g., switch from operating under the business number 32 mode to the personal number 34 mode by depressing a button or icon).

In response to receiving a selection of one of telephone numbers 30, and a telephone number of a recipient of the outgoing telephone call, call manager 24 initiates the outgoing telephone call and formats at least one wireless communication data packet with identifier 38 and/or other information identifying and/or otherwise indicating the selected telephone number 30 for the outgoing call (thereby enabling service provider 14 to identify the selected telephone number 30, providing caller identification (caller ID) information associated with the outgoing telephone call, etc.). Service provider 14 receives the outgoing call from wireless communication device 12 and parses at least one received wireless communication data packet associated with the telephone call or service request to identify and/or otherwise determine the selected telephone number 30 for the outgoing telephone call. In response to determining and/or otherwise identifying the selected telephone number 30 for the outgoing telephone call by wireless communication device 12, call manager 50 accesses relational mapping data 60 to correlate identifier 62 and telephone number 64 with a particular account using account data 68. Billing manager 52 is used to perform any billing services and account management associated with the telephone call.

In some embodiments of the present invention, in response to service provider 14 receiving a telephone service request directed toward wireless communication device 12 (e.g., another service and/or device attempting to place a telephone call to wireless communication device 12), call manager 50 determines and/or otherwise identifies the particular telephone number of wireless communication device 12 to receive the incoming telephone call using relational mapping data 60. For example, in some embodiments of the present invention, call manager 50 identifies the telephone number for which the call is directed for wireless communication device 12 and accesses relational mapping data 60 to identify an identifier 62 corresponding to the telephone call for wireless communication device 12. Call manager 50 formats and/or otherwise encodes at least one wireless communication data packet destined for the wireless communication device 12 with identifier 62 information indicating the telephone number 30 of device 12 for receiving the incoming call.

In response to receiving an indication of an incoming call at wireless communication device 12, call manager 24 parses at least one wireless communication data packet associated with the incoming telephone call to determine and/or otherwise identify a particular telephone number 30 corresponding to the incoming telephone call. For example, in some embodiments of the present invention, call manager 24 correlates the parsed identification information with identifiers 38 to identify a particular telephone number 30 receiving the incoming call.

In some embodiments of the present invention, call manager 24 indicates to a user of device 12 the particular telephone number 30 receiving the incoming telephone call. For example, in some embodiments of the present invention, call manager 24 is configured to display the particular telephone number 30 on interface 28 to provide a user of device 12 with an indication of the incoming telephone call and the particular telephone number 30 associated therewith. The user of device 12 may choose to connect and/or receive the telephone call, allow the telephone call to roll to voice-mail and/or otherwise perform a desired action for the incoming telephone call (or if the user has already connected to a call on the particular number 30, the incoming call may automatically be directed to voice-mail or a busy signal returned). In some embodiments of the present invention, profile data 40 associated with the particular telephone number 30 receiving the incoming call is used to respond to the incoming call. For example, ring setting 46 may be used to initiate a particular audible alert of the incoming call, active/standby setting 42 may be used to respond to the incoming call (e.g., no connect, voice-mail response, etc.), or otherwise. In other embodiments of the present invention ring setting 46 may also be used to activate a particular color of light source disposed on device 12 for particular numbers (e.g., illuminating a red light source for business number 32 calls and a green light source for personal number 34 calls, thereby also alleviating a need to display the particular number 30 of the incoming call).

In some embodiments of the present invention, wireless communication device 12 is configured to concurrently receive and/or otherwise be connected to at least two different telephone calls on at least two different telephone numbers 30. For example, in some embodiments of the present invention, while connected to a particular telephone call for a particular telephone number 30 (e.g., one of business telephone numbers 32), wireless communication device 12 is configured to also receive an incoming telephone call for another telephone number 30 (e.g., one of personal telephone numbers 34). As described above, call manager 24 parses at least one wireless communication data packet associated with the incoming call and, preferably, displays and/or otherwise indicates to a user of device 12 the particular telephone number 30 of the incoming call (e.g., by displaying the particular telephone number 30 associated with the incoming call on interface 28). The user of device 12 may handle the incoming telephone call as desired (e.g., placing the first call on hold while connecting to the second call, allowing the second call to roll to voice-mail, or otherwise) and/or profile data 40 may be otherwise used to respond to the incoming call.

Call management performed by call manager 24 of communication device 12 is preferably performed on communication device 12. However, it should be understood that all or a portion of such call management may be performed by service provider 14 (e.g., by call manager 50). For example, in some embodiments of the present invention, profile data 40 and/or other call management information may be stored by service provider 14 and applied in response to calls directed to communication device 12 (e.g., incoming calls during particular hours for a particular number 32 or 34 automatically directed to voice-mail, application of active/standby settings 42, etc.).

In yet other embodiments of the present invention, the operating mode of communication device 12 is controlled by service provider 14 (e.g., whether operating under a business number 32 mode or a personal number 34 mode). For example, a business may issue communication device to a user 12 for business purposes but allow the user to use the communication device 12 for personal use during particular times or hours (e.g., during weekends). In this example, call manager 50 of service provider 14 automatically controls the number 32 or 34 mode of operation of the particular communication device 12 for the designated hours (e.g., operating under a business number 32 mode during weekdays and only forwarding business calls to communication device 12 during weekdays while automatically directing calls for personal number(s) 34 to voice-mail or another number during weekdays). Thus, call manager 50 may be configured to control various operational aspects and/or modes of communication device 12 based on profile data 40, each number assigned to the communication device 12 , or other criteria.

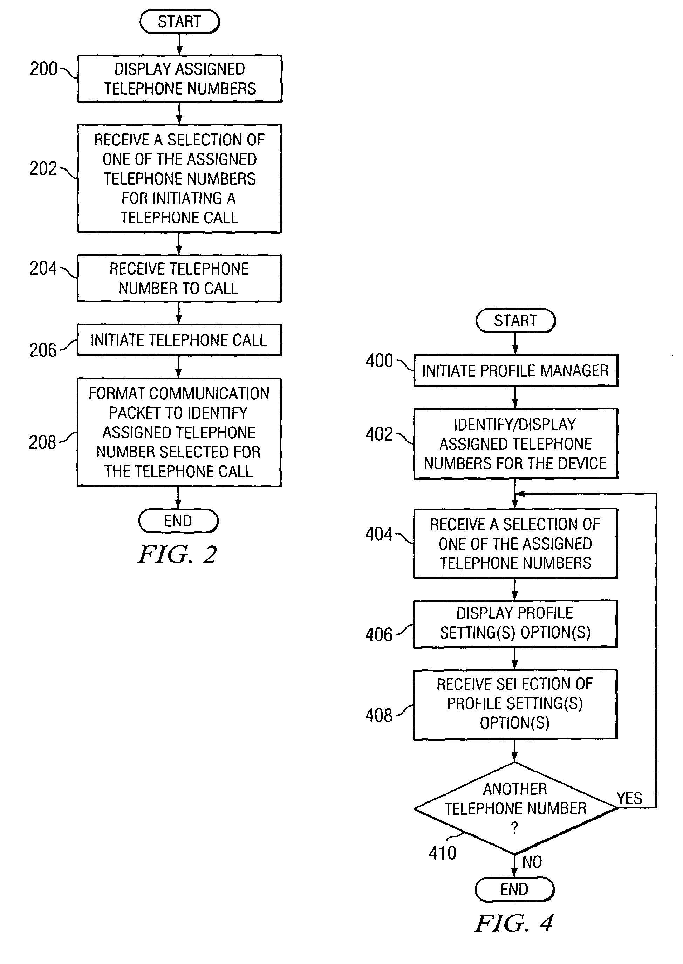

FIGURE 2 is a flow diagram illustrating an embodiment of a multi-number wireless communication method in accordance with the present invention. The method begins at block 200, where call manager 24 displays and/or otherwise indicates to a user telephone numbers 30 assigned to wireless communication device 12. At block 202, call manager 24 receives a selection by a user of one of the assigned telephone numbers 30 for initiating a telephone call. At block 204, call manager 24 receives an indication of the telephone number of which the user desires to call (e.g., by a keypad of interface 28, selection of a previously stored telephone number, or otherwise). At block 206, call manager 24 initiates an outgoing telephone call corresponding to the selected assigned telephone number 30. At block 208, call manager 24 formats and/or otherwise encodes at least one wireless communication data packet associated with the outgoing telephone call with identifier 38 or other identification information identifying the telephone number 30 selected by the user for the outgoing telephone call.

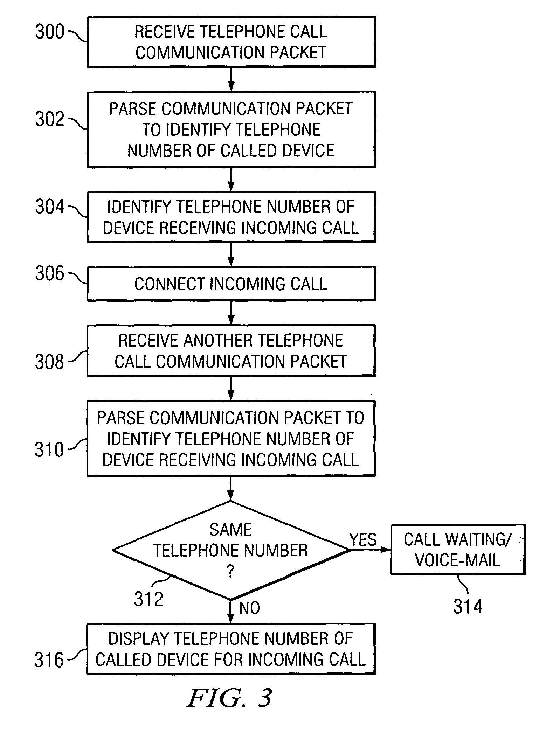

FIGURE 3 is a flow diagram illustrating another embodiment of a multi-number wireless communication method in accordance with the present invention. The method begins at block 300, where wireless communication device 12 receives at least one wireless communication data packet. At block 302, call manager 24 parses at least one wireless communication data packet received by communication device 12 to identify a particular telephone number 30 assigned to communication device 12 that is receiving the incoming call. At block 304, call manager 24 identifies the telephone number 30 of device 12 receiving the incoming telephone call by correlating the parsed information with identifiers 38. At block 306, call manager 24 connects to the incoming call (e.g., in response to a user of device 12 accepting and/or otherwise connecting to the incoming call). It should be understood that a user may handle the incoming call differently should the user so desire (e.g., viewing a display and/or other indication of the incoming call, the number generating the incoming call (e.g., callerid), etc., automatically letting the incoming call transfer to voice-mail, or otherwise).

At block 308, call manager 24 receives an indication of another incoming telephone call to wireless communication device 12. At block 310, call manager parses at least one wireless communication data packet associated with the incoming telephone call of block 308 to identify a telephone number 30 of wireless communication device 12 for receiving the incoming call. At decisional block 312, a determination is made whether the incoming call of block 308 is for the same telephone number 30 as the telephone call of block 304. If the incoming call of block 308 is for the same telephone number 30 as the existing connection to the telephone call received at block 300, the method proceeds to block 314, where the user may perform a desired action for the incoming telephone call (e.g., initiate call waiting, voice-mail or other options). If it is determined at decisional block 312 that the incoming call of block 308 is for a different telephone number 30, the method proceeds to block 316, where call manager 24 identifies and/or otherwise indicates the particular telephone number 30 that is receiving the incoming call (e.g., displaying the particular telephone number 30 on interface 28 or otherwise). The user of device 12 may perform a desired option for the incoming call such as, but not limited to, connecting to the incoming call, allowing the incoming call to roll to voice-mail, or otherwise. Further, it should be understood that profile data 40 may indicate a particular response for the incoming call (e.g., active/standby settings 42).

FIGURE 4 is a flow diagram illustrating another embodiment of a multi-number wireless communication method in accordance with the present invention. At block 400, profile manager 26 is initiated on wireless communication device 12. At block 402, profile manager 26 identifies and/or otherwise displays to a user of wireless communication device 12 the telephone numbers 30 assigned to wireless communication device 12. At block 404, profile manager 26 receives a selection by the user of one of the assigned telephone numbers 30. At block 406, profile manager 26 displays profile data 40 indicating various profile settings and/or options for the selected telephone number 30. For example, profile settings and/or options such as active/standby settings 42, voice-mail settings 44 and/or ring settings 46 may be configured by the user for the selected telephone number 30. At block 408, profile manager 26 receives a selection and/or indication of particular profile settings 40 for the selected telephone number 30. At decisional block 410, a determination is made whether the user desires to configure and/or otherwise modify profile settings for another telephone number 30 assigned to wireless communication device 12. If the user desires to configure and/or otherwise modify profile settings 40 for another telephone number 30 assigned to wireless communication device 12, the method returns to block 404. If the user does not desire to configure and/or otherwise modify profile settings 40 for another telephone number 30 assigned to wireless communication device 12, the method ends.

Thus, embodiments of the present invention enable use of different telephone numbers on a single wireless communication device, thereby enabling a user of the wireless communication device 12 to easily distinguish between and/or use different telephone numbers 30 assigned to device 12 for different purposes (e.g., business or personal). Embodiments of the present invention also enable enhanced billing services associated with wireless communication device 12. For example, by using different telephone numbers 30 for different purposes (e.g., business or personal), billing information associated with wireless communication device 12 processed by service provider 14 may be categorized and/or otherwise formatted based on each telephone number 30 assigned to wireless communication device 12, thereby enabling a user of device 12 to identify costs and/or other information associated with each telephone number 30. It should be understood that in the described methods, certain functionality may be omitted, accomplished in a sequence different from that in the depicted methods, or performed simultaneously or in combination. Also, it should be understood that the depicted methods may be altered to encompass any of the other features or aspects of the invention as described elsewhere in the specification.

## Claims

1. A multi-number wireless communication system (10), comprising:
a wireless communication device (12) configured to initiate a telephone call using each of at least two different telephone numbers (30) assigned thereto.

2. The system (10) of Claim 1, wherein the wireless communication device (12) is configured to receive at least one telephone call on each of the least two different telephone numbers (30).

3. The system (10) of Claim 1, wherein the wireless communication device (12) comprises a call manager (24) configured to format a communication packet of the telephone call with information identifying a select one of the at least two different telephone numbers (30) initiating the telephone call.

4. The system (10) of Claim 1, wherein the wireless communication device (12) comprises a call manager (24) configured to parse a communication packet of an incoming telephone call received on one of the at least two different telephone numbers (30) to identify the one telephone number (30) receiving the incoming call.

5. The system (10) of Claim 1, wherein the wireless communication device (12) comprises a profile manager (26) for assigning a profile setting (40) to at least one of the at least two different telephone numbers (30).

6. The system (10) of Claim 1, wherein the wireless communication device (12) is configured to receive from a user a selection of one of the at least two different telephone numbers (30) for initiating a telephone call.

7. A wireless communication method, comprising:
initiating, by a wireless communication device (12), a telephone call on a select one of at least two different telephone numbers (30) assigned to the wireless communication device (12).

8. The method of Claim 7, further comprising formatting a communication packet associated with the telephone call with an indication of the select one telephone number (30).

9. The method of Claim 7, further comprising receiving an incoming telephone call on another one of the least two different telephone numbers (30).

10. The method of Claim 7, further comprising parsing a communication packet of an incoming telephone call received on at least one of the at least two different telephone numbers (30) to identify the at least one telephone number (30).
